# FASCICULE DE BREVET EUROPEEN

(11) **EP 4 347 321 B1**
(45) Date de publication et mention de la délivrance du brevet: **24.06.2026**
(21) Numéro de dépôt: 22727961.9
(22) Date de dépôt: 02.05.2022
(51) Int. Cl.: B60R 21/34, B60Q 1/04, B62D 25/16

(54) **SUPPORT DE FIXATION DE DEUX ÉQUIPEMENTS DE VÉHICULE**
HALTERUNG ZUR BEFESTIGUNG VON ZWEI FAHRZEUGAUSSTATTUNGEN
MOUNTING BRACKET FOR TWO VEHICLE EQUIPMENTS

(30) Priorité: 03.06.2021 FR 2105860
(43) Date de publication de la demande: 10.04.2024
(73) Titulaire: Stellantis Auto SAS, 78300 Poissy (FR)
(72) Inventeur: DAROWNY, Fabrice, 91290 LA NORVILLE (FR); GOURVENNEC, Thibault, 91210 DRAVEIL (FR); MICHEL, Xavier, 77340 PONTAULT COMBAULT (FR)
(74) Mandataire: BCIP
(86) Numéro de dépôt international: PCT/FR2022/050846
(87) Numéro de publication internationale: WO 2022/254114

(56) Documents cités:
- EP-A1- 1 502 841
- EP-A2- 1 808 332
- WO-A1-2006/117455
- DE-A1- 10 347 810
- DE-B3- 10 237 454

## Description

### DOMAINE TECHNIQUE DE L'INVENTION

L'invention a trait au domaine des véhicules automobiles et concerne plus particulièrement la fonction de fixation de pièces d'équipements extérieurs d'un véhicule, en tenant compte de la nécessité de positionnement desdites pièces d'équipements entre elles.

L'invention concerne aussi la fonction d'absorption des chocs piétons au niveau desdits équipements extérieurs en particulier au niveau d'une extrémité latérale avant du véhicule.

L'invention concerne ainsi un support qui assure cette fonction de fixation pour une aille avant et/ou un projecteur avant et qui comporte aussi des moyens permettant d'absorber des chocs tête se produisant principalement, au niveau de la partie supérieure de l'aile de véhicule.

L'invention concerne un véhicule comprenant un tel support et les pièces d'équipements fixés sur ledit support.

### ARRIÈRE-PLAN TECHNOLOGIQUE DE L'INVENTION

Il est connu de fixer des ailes avant sur des supports qui permettent d'absorber ces chocs têtes. Ces supports permettent de fixer sur une même structure de base des ailes de formes et de tailles différentes en fonction des silhouettes de véhicules.

Ainsi le document de brevet FR2911106 décrit un support pour une aile avant de véhicule automobile. Ce support comprend interface de fixation à la caisse et une autre interface pour la fixation d'une aile avant, ledit support ayant la capacité de s'écraser lors d'un choc piéton en particulier lors d'un choc tête sur l'aile de sorte à amoindrir les effets du choc tête sur l'aile.

Le document DE 103 47 810 A1, considéré comme l'état de la technique le plus proche, divulgue également un support de fixation pour des composants de carrosserie, conçu pour se déformer en cas de choc afin d'assurer la protection des piétons.

De plus, il est nécessaire de pouvoir fixer, avec économie de moyens, sur une même base de structure de véhicule non seulement une aile mais aussi un projecteur avant et de respecter des conditions de jeux et d'affleurement entre le projecteur avant et l'aile, tout en ayant de bonnes propriétés d'absorption de l'énergie d'un choc tête sur l'aile et/ou sur le projecteur avant.

L'état antérieur de la technique n'est donc pas assez efficace pour proposer une définition d'un support qui permet à la fois de fixer une aile avant et un projecteur avant, d'assurer le bon positionnement des pièces entre elles, et aussi d'assurer une absorption suffisante de l'énergie d'un choc tête sur l'aile et/ou sur le projecteur.

### DESCRIPTION GENERALE DE L'INVENTION

L'invention a pour objet de résoudre les problèmes de l'art antérieur.

A cette fin, l'invention est définie par le support de véhicule tel que présenté dans la revendication 1. Des modes de réalisation avantageux sont décrits dans les revendications dépendantes.

L'invention propose ainsi un support de véhicule, destiné à être fixé à une partie de structure du véhicule, le support comprenant :
- une première zone de fixation destinée à la fixation du support à la structure du véhicule,
- une deuxième zone de fixation destinée à la fixation d'une aile,
une troisième zone de fixation destinée à la fixation d'un équipement du véhicule.

Un seul et même support pour fixer une aile et un équipement du véhicule a l'avantage d'assurer avec économie de moyen la fixation de l'aile et de l'équipement.

Conformément à l'invention, le support comporte une platine sensiblement plane comprenant la première zone de fixation et la troisième zone de fixation, ladite troisième zone étant disposée à une extrémité longitudinale de la platine. Le support comporte également une partie en saillie s'étendant sensiblement selon la direction verticale depuis la platine, la deuxième zone de fixation étant disposée à l'extrémité de cette partie en saillie.

De manière caractéristique à l'invention, la partie en saillie comporte des zones frangibles disposées entre la platine et la deuxième zone de fixation. Cette configuration permet le rapprochement de la deuxième zone de fixation vers la platine lors de l'application d'un effort (typiquement lors d'un choc) orienté de la deuxième zone vers la platine, lorsque cet effort dépasse une valeur donnée provoquant la rupture desdites zones frangibles. Ainsi, lors d'un choc s'exerçant avec une composante verticale, les zones frangibles se rompent et permettent d'absorber une partie de l'énergie du choc.

Dans un mode de réalisation de l'invention, la partie en saillie comporte une première tranche s'étendant depuis la platine et une deuxième tranche disposée verticalement au-dessus de la première tranche, les deux tranches étant séparées et liées par les zones frangibles. La première tranche est creuse et de section intérieure plus grande que la section extérieure de la deuxième tranche, de sorte à permettre à la deuxième tranche de pénétrer et coulisser dans la première après la rupture des zones frangibles.

### DESCRIPTION DETAILLEE

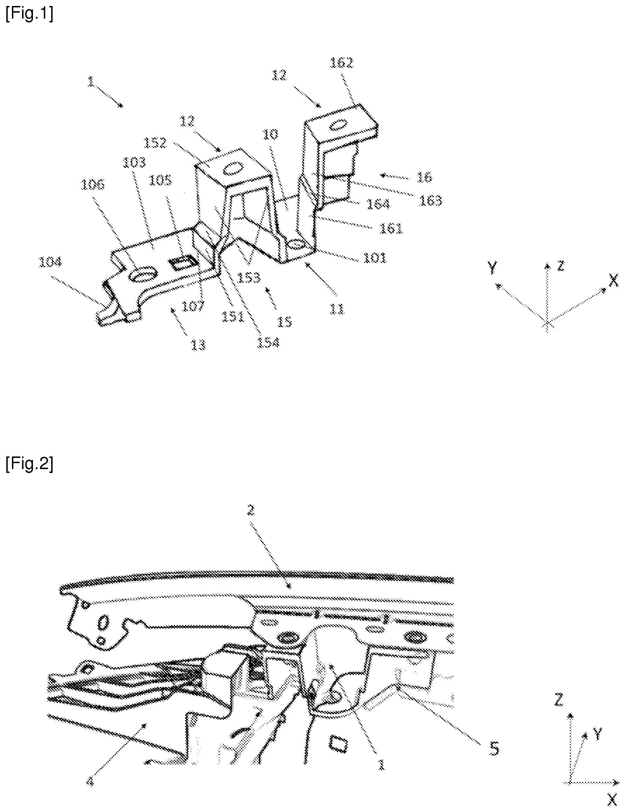

L'invention sera mieux comprise à la lecture de la description qui va suivre, donnée uniquement à titre d'exemple et faite en se référant aux dessins annexés, sur lesquels :
⁅Fig.1] représente une vue générale en perspective du support selon l'invention.
[Fig.2] représente une vue partielle par l'intérieur du véhicule d'une aile et d'un projecteur avant assemblés au support.
Les dessins sont des représentations schématiques servant à faciliter la compréhension de l'invention. Les composants ne sont pas forcément représentés à l'échelle.

Dans la description qui suit, le terme « comprendre » est synonyme de « inclure » et n'est pas limitatif en ce qu'il autorise la présence d'autres éléments ou moyens d'un module de projecteur. Il est entendu que le terme « comprendre » inclut les termes « consister en ». Sur les différentes figures, les mêmes références désignent des éléments identiques ou similaires.

La direction X est l'axe longitudinal du véhicule en ordre de marche, orienté de l'avant du véhicule vers l'arrière du véhicule

La direction Y est la direction transverse du véhicule en ordre de marche.

La direction Z est la verticale du véhicule orientée vers le haut.

Par ailleurs, le terme « sensiblement » sera utilisé pour indiquer qu'un léger écart est admis par rapport à une position ou disposition nominale prédéterminée, tout en restant inclus dans le cadre de l'invention.

Dans la description détaillée qui va suivre, l'invention décrit un support pour une aile avant et pour un projecteur avant. Le terme projecteur signifie dispositif de projection lumineuse sans préjuger de la nature du signal lumineux produit. L'invention n'est nullement limitative à ce cas et la transposition de l'invention à d'autres supports de pièces d'équipements est à la portée d'un homme du métier. Par exemple, les pièces d'équipements peuvent être une aile et un dispositif de décor extérieur ou une aile et un capteur ou une caméra. Le support 1 représenté en figure 1 est un support pour une aile 2 et un équipement 4 de véhicule, ledit support 1 étant destiné à être fixé à une partie de structure 5 du véhicule, le support 1 comprenant
- une première zone 11 de fixation destinée à la fixation du support 1 à la partie de structure du véhicule,
- une deuxième zone 12 de fixation destinée à la fixation d'un premier équipement,
, et une troisième zone 13 de fixation destinée à la fixation d'un deuxième équipement du véhicule.

La première zone 11 de fixation est disposée à distance de la deuxième zone 12 de fixation selon une direction verticale. La troisième zone 13 de fixation comprend des moyens de positionnement du deuxième équipement dans une direction longitudinale et dans une direction transversale, ces directions longitudinales et transversales étant perpendiculaires entre elles et à la direction verticale.

En situation véhicule, le support 1 étant fixé à une partie de structure du véhicule, la direction verticale du support est sensiblement alignée avec la direction Z du véhicule, la direction transversale est sensiblement la direction Y du véhicule et la direction longitudinale du support est sensiblement alignée avec la direction X du véhicule

Ainsi, l'équipement et l'aile étant fixés et positionnés sur un même support ont ce support comme référence commune, et ainsi sont disposés géométriquement l'un par rapport à l'autre de sorte à respecter des conditions de jeux et d'affleurement prescrits entre les deux équipements.
Dans une variante de l'invention, l'aile et l'équipement comprennent des bords en vis-à-vis et alignés en partie qui, pour des questions de qualité perçue, respectent des conditions de jeux et d'affleurement prescrits entre les deux équipements.

Le support 1 comporte une platine 10 sensiblement plane comprenant la première zone 11 de fixation et la troisième zone 13 de fixation, ladite troisième zone 13 de fixation étant disposée à une extrémité longitudinale de ladite platine.

La platine 10 telle que représentée en figure 1, est plane, et s'étend sensiblement dans un plan horizontal en situation du véhicule.

En d'autres termes, la platine 10 comporte des parois planes sensiblement horizontales dont une paroi terminale 103 forme l'extrémité longitudinale destinée à la fixation du deuxième équipement.

Ainsi la platine 10 permet de faire un positionnement par la paroi terminale 103, de l'équipement par rapport à la direction verticale par un appui sur la paroi 103.

La paroi terminale 103 comporte à son extrémité longitudinale un ergot 104, destiné au positionnement latéral du deuxième équipement. Tel que représenté en figure 1, l'ergot 104 est une excroissance, sensiblement en forme de pion, et dans le plan de la paroi terminale 103, comportant au moins un bord perpendiculaire à la direction transversale sur lequel un bord du deuxième équipement est destiné à s'appuyer transversalement.

Telle que représentée en figure 1, la troisième zone de fixation (13) comporte en outre un moyen de positionnement complémentaire de l'équipement (4) au moins en direction longitudinale.

Le moyen de positionnement complémentaire comprend un orifice 105 destiné au positionnement longitudinal du deuxième équipement, ledit orifice 105 comportant un bord perpendiculaire à la direction longitudinale sur lequel une partie du deuxième équipement est destiné à s'appuyer longitudinalement.

Dans une variante de l'invention, un pion de centrage est utilisé pour positionné l'équipement par rapport à l'orifice 105.

Le moyen de positionnement complémentaire comprend de plus un trou 106 destiné à la fixation, par exemple par vissage ou clippage, de l'équipement 4. L'équipement 4 est ainsi maintenu verticalement par cette fixation sur la paroi terminale 103, en appui sur la paroi terminale 103.

La platine 10 comporte au moins un trou de fixation 101 destiné à la fixation, par exemple par vissage ou clippage, du support 1 à une partie de structure du véhicule.

Dans une variante de l'invention, la platine 10 comporte en outre un orifice destiné à un pion de centrage ou un pion de centrage venu de matière avec la platine 10, le pion de centrage étant destiné à positionner le support 1 par rapport à la structure 5 du véhicule.

Le support 1 comporte au moins une partie en saillie 15, 16 depuis la platine 10 sensiblement selon la direction verticale Z par rapport à ladite platine 10, la deuxième zone 12 de fixation étant disposée à l'extrémité de la partie en saillie 15, 16.

Dans la représentation de la figure 1, la platine 10 comporte deux parties en saillie, 15, 16.

La deuxième zone 12 de fixation est disposée en extrémité des parties en saillie 15, 16. Dans la représentation de la figure 1, le support 1 comporte en extrémité de chaque partie en saillie 15, 16, respectivement une paroi d'extrémité 152, 162, sensiblement plane et sensiblement parallèle à la platine 10. Chacune des parois 152, 162 comporte un orifice destiné à la fixation du premier équipement, par exemple par vissage ou clippage.

En d'autres termes, les parois d'extrémité 152, 162, forment la zone 12 de fixation du premier équipement.

Le support 1 comporte en outre des zones frangibles disposées entre la platine 10 et la deuxième zone de fixation 12, de sorte à permettre le rapprochement de la deuxième zone 12 de fixation vers la platine 10 lors de l'application d'un effort orienté de la deuxième zone de fixation 12 vers la platine 10 et lorsque ledit effort dépasse une valeur donnée par rupture de ladite zone frangible.

Ainsi, les conséquences d'un choc sur le premier équipement, dont une composante comprend un effort orienté de la deuxième zone 12 de fixation vers la platine 10, c'est-à-dire vers la première zone 11 de fixation, et lorsque ledit effort dépasse une valeur donnée, seront amoindris par la rupture des zones frangibles.

Selon l'invention, la partie en saillie ou chaque partie en saillie 15, 16, comporte une première tranche s'étendant depuis la platine 10 et une deuxième tranche disposée verticalement au-dessus de la première tranche.

La deuxième tranche comporte l'extrémité de la partie en saillie 15, 16. Les deux tranches sont séparées par les zones frangibles, et liées entre elles par les zones frangibles.

La première tranche est creuse et de section intérieure plus grande que la section extérieure de la deuxième tranche de sorte à permettre à la deuxième tranche de passer dans la section intérieure de la première tranche, suite à la rupture des zones frangibles

Par exemple, comme représenté en figure 1, la première partie 15 en saillie comporte une première tranche comportant des parois 151 formant en section dans un plan horizontal une forme sensiblement en U, les parois étant sensiblement verticales. L'intérieur de cette partie en saillie est la partie intérieure du U.

La première partie 15 en saillie comporte une deuxième tranche comportant des parois 153 formant en section dans un plan horizontal une forme sensiblement en U, les parois 153 étant sensiblement verticales. Les parois du U formé par la deuxième tranche de la partie en saillie 15, 16 sont décalées vers l'intérieur du U. La première tranche et la deuxième tranche sont sensiblement alignées sur le même axe sensiblement vertical Z. La face extérieure de chaque paroi 153 de la deuxième tranche est ainsi à même de glisser à l'intérieur du U de la première tranche, le long d'une face intérieure de chaque parois 151 de la première tranche suite à une rupture de la partie frangible.

Chaque paroi 151 formant une branche et/ou la base du U de la première tranche est reliée à la platine 10 et à la partie frangible. La partie frangible est reliée à chaque paroi (réf) formant les branches et/ou la base du U de la deuxième tranche.

Les zones frangibles de la partie en saillie sont formées par des parois frangibles 154 reliées respectivement à des parois 151 de la première tranche et à des parois 153 de la deuxième tranche les plus proches, les parois 153 de la deuxième tranche étant décalées vers l'intérieur du U par rapport aux parois 151, de la première tranche, à laquelle elle sont reliées par l'intermédiaire des parois 154. Les parois frangibles 154 consistent par exemple en des parois d'épaisseurs amincies par rapport aux épaisseurs des parois 151 et/ou 153, respectivement de la première tranche et de la deuxième tranche, et/ou comportent des affaiblissements par des découpes et/ou orifices et/ou rainures.

Dans une variante de l'invention les parois 151 et 153 sont reliées par des barreaux à chacune de leurs extrémités longitudinales ou transversales.

La deuxième partie en saillie 16 selon la figure 1, comporte une première tranche comportant des parois 161 formant en section dans un plan horizontal une forme sensiblement en L, les parois 161 étant sensiblement verticales. L'intérieur de cette partie en saillie est la partie intérieure du L. Cette deuxième partie en saillie 16 comporte une deuxième tranche comportant des parois 163 formant en section dans un plan horizontal une forme sensiblement en L, les parois 163 étant sensiblement verticales.

Des parties frangibles sont disposées entre la première tranche et la deuxième tranche de la deuxième partie en saillie 16 et sont formées par des parois frangibles 164 reliant les parois 161 aux parois 163 les plus proches.

Les parois 163 du L formé par la deuxième tranche de cette deuxième partie en saillie sont décalées vers l'intérieur du L par rapport aux parois 161. La face extérieure de chaque paroi 163 de la deuxième tranche en L est ainsi à même de glisser à l'intérieur du L de la première tranche, le long d'une face intérieure d'une des parois de la première tranche suite à une rupture des parois frangibles 164.

Chaque paroi 163 est reliée d'un côté aux zones frangibles et de l'autre à la paroi 162 de la deuxième zone de fixation

Les zones frangibles de la deuxième partie en saillie 16 sont formées par des parois frangibles 164 reliant respectivement une paroi 161 de la première tranche en forme de L à la paroi 163 de la deuxième tranche en forme du L la plus proche.

Les parois frangibles 164 de la deuxième partie en saillie consistent en des parois d'épaisseurs amincies par rapport aux épaisseurs des parois de la première tranche et/ou de la deuxième tranche en forme de L et/ou comportent des affaiblissements par des découpes et/ou orifices et/ou rainures.

Dans une variante de l'invention les parois 161 et 163 sont reliées par des barreaux à chacune des extrémités longitudinales ou transversales.

Ainsi, suite à une rupture de la partie frangible de la deuxième partie en saillie, les formes en L de la deuxième tranche sont guidées à l'intérieur des formes en L de la première tranche, les faces extérieures des parois 163 de la deuxième tranche en forme de L, étant guidées par les faces intérieures des parois 161 de la première tranche en forme de L.

Tel que représenté en figure 1, le support 1 comporte deux parties 15, 16 en saillies alignées suivant l'axe longitudinal, la première zone 11 de fixation étant sur la platine 10 et disposée entre lesdites deux parties en saillies 15, 16 et la deuxième zone 12 de fixation étant disposée aux deux extrémités des parties en saillies.

Selon la représentation de la figure 1, la première partie 15 en saillie comportant des tranches en forme en U est disposée longitudinalement plus proche de la paroi terminale 103 que la partie en saillie 16. La deuxième partie en saillie 16 comportant les tranches en formes de L est disposée l'opposée de la paroi terminale 103 par rapport à la première partie en saillie.

Tel que représenté en figure 1, la partie en saillie 16 comportant la tranche en forme de L est disposée à une extrémité longitudinale du support 1 à l'opposé de la troisième zone 13 de fixation, et la partie en saillie 15 comportant la tranche en forme de U est disposée entre la partie en saillie 16 et la troisième zone 13.

Le fait d'avoir une partie en saillie 16 en extrémité longitudinale du support 1 permet un gain d'encombrement en extrémité du support 1. Un bord du L est disposé sensiblement selon la direction longitudinale du support 1 et joint à son extrémité la plus éloignée de l'extrémité du support, la plus éloignée de la troisième zone 13, l'autre bord du L qui est disposé sensiblement selon la direction transversale du support 1.

Le support 10 comporte entre la première partie en saillie et la deuxième partie en saillie une portion de paroi comportant un orifice 101 destiné à la fixation du support 10 sur une partie de structure du véhicule. Dans la représentation de la figure 1, l'orifice de fixation 101 de la platine 10 à la partie de structure (non représentée) est disposé entre la première partie 15 en saillie et la deuxième partie 16 en saillie. La fixation de la platine 10 est réalisée de préférence par vissage ou éventuellement par clippage.

Dans la représentation de l'invention de la figure 1, la première zone 11 de fixation, les deux extrémités des zones en saillie 15, 16 et la troisième zone de fixation 13 sont sensiblement alignées selon la direction longitudinale, ladite direction longitudinale étant la direction longitudinale du support.

Dans une variante de l'invention, la troisième zone de fixation 13 comporte une portion frangible disposée entre les moyens de fixations 104, 105, 106, de l'équipement et la partie en saillie 15. Par exemple, comme représenté en figure 1, la paroi terminale 103 s'étend jusqu'à la première partie en saillie 15 et comporte à sa jonction avec cette première partie en saillie 15 des moyens frangibles 107 destinés à se rompre au-delà d'un effort limite donné. Les moyens frangibles sont formés par exemple par des affaiblissements créés dans la paroi terminale 103 à la proximité avec une des parois 151, telles que des réductions d'épaisseurs, des ouvertures créées dans la paroi 103.

En d'autres termes, l'équipement étant fixé à ladite paroi terminale 103, un effort s'exerçant sur ledit équipement au-delà d'un effort limite donné provoque la rupture de l'équipement et de la portion de platine 10 portant les parties en saillie 15, 16.

L'invention concerne aussi un véhicule comportant d'un même côté latéral du véhicule, une aile avant 2, un projecteur 4 et un support 1 selon l'invention, dans lequel le support 1 est fixé à une partie de la structure avant du véhicule par sa première zone de fixation. Dans la représentation de la figure 2, l'aile avant 2 est fixée sur la deuxième zone de fixation (12) et le projecteur 4 forme l'équipement fixé sur la troisième zone 13 de fixation du support 1.

Tel que représenté dans le mode de réalisation de la figure 2, la direction longitudinale X du véhicule est parallèle à la direction longitudinale du support 1, la direction Y transversale du véhicule est parallèle à la direction transversale du support 1, et la direction Z verticale du véhicule est identique à la direction verticale du support 1 et orientée dans le même sens.

Ainsi, un support 1 selon l'invention permet à une aile 2 et à un projecteur 4 d'être fixés à un même support 1 par une seule et même pièce, de sorte à faciliter les positionnements respectifs dudit projecteur 4 et de l'aile 2, l'aile 2 et le projecteur 4 comportant des portions de bords en vis-à-vis et alignées pour lesquelles il est prescrit des conditions de jeux et d'affleurement.

Lors d'un choc de la tête d'un piéton sur le haut de l'aile et au-delà d'un effort limité, les parois frangibles 154 et 164 se rompent, ce qui permet d'amoindrir les effets du choc subis par la tête du piéton.

Lors d'un choc sur le projecteur 4 et au-delà d'un effort limite, les moyens frangibles 107 se rompent et permettent d'amoindrir les effets du choc à la fois sur un piéton et/ou sur le projecteur 4.

## Revendications

1. Support (1) de véhicule, destiné à être fixé à une partie de structure (5) du véhicule, le support (1) comprenant
- une première zone (11) de fixation destinée à la fixation du support 1 à la structure (5) du véhicule,
- une deuxième zone (12) de fixation destinée à la fixation d'une aile (2), **caractérisé en ce qu'**il comprend une troisième zone (13) de fixation destinée à la fixation d'un équipement (4) du véhicule,
- une platine (10) sensiblement plane comprenant la première zone (11) de fixation et la troisième zone (13) de fixation, ladite troisième zone (13) de fixation étant disposée à une extrémité longitudinale de ladite platine (10), et
- une partie en saillie (15, 16) sensiblement selon la direction verticale Z depuis la platine (10), la deuxième zone (12) de fixation étant disposée à l'extrémité de la partie en saillie (15, 16),
**caractérisé en ce que** la partie en saillie (15, 16) comporte des zones frangibles disposées entre la platine (10) et la deuxième zone (12) de fixation, de sorte à permettre le rapprochement de la deuxième zone (12) de fixation vers la platine (10) lors de l'application d'un effort orienté de la deuxième zone (12) de fixation vers la platine (10) et lorsque ledit effort dépasse une valeur donnée par rupture desdites zones frangibles.

2. Support (1) selon la revendication 1, dans lequel la première zone (11) de fixation est disposée à distance de la deuxième zone (12) de fixation selon une direction verticale Z.

3. Support (1) selon l'une des revendications 1 ou 2, dans lequel la troisième zone (13) de fixation comprend des moyens de positionnement (104, 105, 106) de l'équipement (4) dans la direction longitudinale X, et dans une direction transversale Y, et de préférence dans la direction verticale Z, ces directions longitudinale X et transversale Y étant perpendiculaires entre elles et à la direction verticale Z.

4. Support (1) suivant la revendication 3, dans lequel les moyens de positionnement comprennent un ergot (104) s'étendant dans la direction longitudinale X depuis un bord de la platine (10) à l'extrémité longitudinale de la troisième zone (13) de fixation, l'ergot (104) étant destiné à un positionnement transversal de l'équipement (4).

5. Support suivant la revendication 4, dont la troisième zone de fixation (13) est une paroi terminale de la platine (10) à l'extrémité longitudinale de ladite platine (10), comportant l'ergot (104) et un moyen de position complémentaire (105, 106) de l'équipement (4) au moins en direction longitudinale X.

6. Support (1) suivant la revendication 5 dont la partie en saillie (15) comporte une première tranche s'étendant depuis la platine (10) et une deuxième tranche disposée verticalement au-dessus de la première tranche,
- le deuxième tranche comportant l'extrémité de la partie en saillie (15),
- les deux tranches étant séparées par des zones frangibles,
- les deux tranches étant liées aux zones frangibles,
- la première tranche étant creuse et de section intérieure plus grande que la section extérieure de la deuxième tranche de sorte à permettre à la deuxième tranche de passer dans la section intérieure de la première tranche suite à la rupture des zones frangibles lors de l'application d'un effort orienté de la deuxième zone (12) de fixation vers la platine (10) et lorsque ledit effort dépasse une valeur donnée provoquant la rupture de ladite zone frangible.

7. Véhicule comportant d'un même côté latéral du véhicule une aile (2) avant, un projecteur (4) et un support (1) selon l'une des revendications précédentes, dans lequel le support (1) est fixé à une partie de la structure (5) avant du véhicule par sa première zone (11) de fixation, et dans lequel l'aile (2) avant est fixée à la deuxième zone (12) de fixation du support (1) et dans lequel le projecteur (4) forme un équipement fixé à la troisième zone (13) de fixation du support (1).

## Patentansprüche

1. Fahrzeughalter (1) zur Befestigung an einem Bauteil (5) des Fahrzeugs, wobei der Halter (1) umfasst
- einen ersten Befestigungsbereich (11) zur Befestigung des Halters 1 an der Fahrzeugstruktur (5),
- einen zweiten Befestigungsbereich (12), der zur Befestigung eines Flügels (2) bestimmt ist, **dadurch gekennzeichnet, dass** er einen dritten Befestigungsbereich (13) umfasst, der zur Befestigung einer Ausrüstung (4) des Fahrzeugs bestimmt ist,
- eine im Wesentlichen ebene Platte (10) mit dem ersten Befestigungsbereich (11) und dem dritten Befestigungsbereich (13), wobei der dritte Befestigungsbereich (13) an einem Längsende der Platte (10) angeordnet ist, und
- ein Vorsprung (15, 16) im Wesentlichen in vertikaler Z-Richtung von der Platine (10), wobei der zweite Befestigungsbereich (12) am Ende des Vorsprungs (15, 16) angeordnet ist,
Der vorstehende Teil (15, 16) weist zerbrechliche Zonen auf, die zwischen der Platte (10) und der zweiten Befestigungszone (12) angeordnet sind, sodass die Annäherung der zweiten Befestigungszone (12) an die Platte (10) ermöglicht wird, wenn eine Kraft aufgebracht wird, die von der zweiten Befestigungszone (12) auf die Platte (10) gerichtet ist, und wenn die Kraft einen gegebenen Wert durch das Zerbrechen der zerbrechlichen Zonen überschreitet.

2. Halterung (1) nach Anspruch 1, wobei der erste Befestigungsbereich (11) in einer vertikalen Z-Richtung von dem zweiten Befestigungsbereich (12) beabstandet ist.

3. Halterung (1) nach einem der Ansprüche 1 oder 2, bei der der dritte Befestigungsbereich (13) Mittel (104, 105, 106) zum Positionieren der Vorrichtung (4) in Längsrichtung X und in Querrichtung Y und vorzugsweise in vertikaler Richtung Z umfasst, wobei die Längsrichtung X und die Querrichtung Y zueinander und zur vertikalen Richtung Z senkrecht sind.

4. Halterung (1) nach Anspruch 3, bei der die Positioniereinrichtung einen Zapfen (104) aufweist, der sich in Längsrichtung X von einem Rand der Platte (10) bis zum Längsende des dritten Befestigungsbereichs (13) erstreckt, wobei der Zapfen (104) für eine Querpositionierung der Vorrichtung (4) vorgesehen ist.

5. Halterung nach Anspruch 4, bei der der dritte Befestigungsbereich (13) eine Endwand der Platte (10) am Längsende der Platte (10) ist, die den Zapfen (104) und ein komplementäres Positionsmittel (105, 106) der Vorrichtung (4) zumindest in Längsrichtung X aufweist.

6. Halterung (1) nach Anspruch 5, bei der der vorstehende Abschnitt (15) einen ersten Wafer, der sich von der Platte (10) erstreckt, und einen zweiten Wafer aufweist, der vertikal über dem ersten Wafer angeordnet ist,
- die zweite Tranche mit dem Ende des vorstehenden Teils (15),
- die beiden Tranchen durch gefährdete Zonen getrennt sind,
- die beiden Tranchen an die gefährdeten Gebiete gebunden sind,
- die erste Scheibe hohl ist und einen größeren inneren Querschnitt als der äußere Querschnitt der zweiten Scheibe aufweist, sodass die zweite Scheibe in den inneren Querschnitt der ersten Scheibe übergehen kann, wenn die zerbrechlichen Bereiche bei Anwendung einer Kraft, die von der zweiten Befestigungszone (12) auf die Platte (10) gerichtet ist, gebrochen werden und wenn die Kraft einen bestimmten Wert überschreitet, der die Zerbrechlichkeit der zerbrechlichen Zone verursacht.

7. Fahrzeug mit einem vorderen Flügel (2), einem Scheinwerfer (4) und einer Halterung (1) auf derselben Fahrzeugseite nach einem der vorhergehenden Ansprüche, wobei die Halterung (1) an einem Teil der vorderen Struktur (5) des Fahrzeugs durch ihren ersten Befestigungsbereich (11) befestigt ist, und wobei der vordere Flügel (2) an dem zweiten Befestigungsbereich (12) der Halterung (1) befestigt ist, und wobei der Scheinwerfer (4) eine Ausrüstung bildet, die an dem dritten Befestigungsbereich (13) der Halterung (1) befestigt ist.

## Claims

1. Vehicle support (1), intended to be fixed to a structural part (5) of the vehicle, the support (1) comprising
- first fixing zone (11) for fixing the support 1 to the structure (5) of the vehicle,
- second fastening zone (12) for fastening a wing (2), comprising a third fastening zone (13) for fastening a piece of equipment (4) of the vehicle,
- substantially planar plate (10) comprising a first fixing zone (11) and a third fixing zone (13), said third fixing zone (13) being disposed at a longitudinal end of said plate (10), and
- projecting part (15, 16) substantially along a vertical management Z from the plate (10), the second fixing zone (12) being disposed at the end of the projecting part (15, 16),
- wherein the protruding part (15, 16) comprises breakable zones arranged between the plate (10) and the second fixing zone (12), so as to allow the second fixing zone (12) to move towards the plate (10) during the application of an orientated force from the second fixing zone (12) towards the plate (10) and when said force exceeds a given value by break point of said breakable zones.

2. Support (1) according to claim 1, wherein the first fixing zone (11) is arranged at a distance from the second fixing zone (12) along a vertical management Z.

3. Support (1) according to one of Claims 1 or 2, in which the third fixing zone (13) comprises means (104, 105, 106) for positioning the equipment (4) in the longitudinal management X, and in a transverse management Y, and preferably in the vertical management Z, these longitudinal management X and transverse Y being perpendicular to each other and to the vertical management Z.

4. Support (1) according to claim 3, wherein the positioning means comprise a lug (104) extending in the longitudinal management X from an edge of the plate (10) at the longitudinal end of the third fixing zone (13), the lug (104) being intended for transverse positioning of the equipment (4).

5. Support according to claim 4, the third fixing zone (13) of which is an end wall of the plate (10) at the longitudinal end of said plate (10), comprising the lug (104) and a complementary position means (105, 106) of the equipment (4) at least in longitudinal management X.

6. Support (1) according to claim 5, the projecting part (15) of which comprises a first slice extending from the plate (10) and a second slice arranged vertically above the first slice,
- the second slice comprising the end of the projecting part (15),
- the two slices being separated by frangible zones,
- the two slices being linked to the frangible zones,
- the first slice being hollow and having an inner cross-section larger than the outer cross-section of the second slice so as to allow the second slice to pass into the inner cross-section of the first slice following the break point of the breakable zones during the application of a force orientated from the second fixing zone (12) towards the plate (10) and when said force exceeds a given value causing the break point of said breakable zone.

7. Vehicle comprising, on the same lateral side of the vehicle, a front wing (2), a headlight (4) and a support (1) according to one of the previous claims, in which the support (1) is fixed to a part of the front structure (5) of the vehicle by its first fixing zone (11), and in which the front wing (2) is fixed to the second fixing zone (12) of the support (1) and in which the headlight (4) is an item of equipment fixed to the third fixing zone (13) of the support (1).
